# EUROPÄISCHE PATENTSCHRIFT

(11) **EP 1 015 463 B1**
(45) Veröffentlichungstag und Bekanntmachung des Hinweises auf die Patenterteilung: **11.12.2002**
(21) Anmeldenummer: 98947510.8
(22) Anmeldetag: 03.09.1998
(51) Int. Cl.: C07F 17/00

(54) **VERFAHREN ZUR HERSTELLUNG VON METALLOCENEN**
METHOD FOR PRODUCING METALLOCENES
PROCEDE DE PRODUCTION D'ALLIAGES ORGANOMETALLIQUES

(30) Priorität: 11.09.1997 DE 19739946
(43) Veröffentlichungstag der Anmeldung: 05.07.2000
(73) Patentinhaber: Basell Polyolefine GmbH, 50389 Wesseling (DE)
(72) Erfinder: BINGEL, Carsten, D-65830 Kriftel (DE); SCHIEMENZ, Berthold, D-65929 Frankfurt (DE); GÖRES, Markus, D-65760 Eschborn (DE)
(86) Internationale Anmeldenummer: EP9805588
(87) Internationale Veröffentlichungsnummer: WO99012943

(56) Entgegenhaltungen:
- US-A- 5 264 590
- US-A- 5 302 733
- CHEMICAL ABSTRACTS, vol. 121, no. 94, 1. August 1919 Columbus, Ohio, US; abstract no. 57032, TAKECHI, EIJI ET AL: "Manufacture of halogenated metallocenes" XP002085477 & JP 06 041169 A (NICHIA KAGAKU KOGYO KK, JAPAN)
- CHEMICAL ABSTRACTS, vol. 120, no. 94, 28. März 1919 Columbus, Ohio, US; abstract no. 163528, TAKECHI, EIJI ET AL: "Preparation of metallocene halides" XP002085478 & JP 05 239081 A (NICHIA KAGAKU KOGYO KK, JAPAN)

## Beschreibung

Die vorliegende Erfindung betrifft ein Verfahren zur Herstellung von Metallocenen.

Metallocene können, gegebenenfalls in Kombination mit einem oder mehreren Co-Katalysatoren, als Katalysatorkomponente für die Polymerisation und Co-Polymerisation von Olefinen verweridet werden. Insbesondere werden als Katalysatorvorstufen halogenhaltige Metallocene eingesetzt, die sich beispielsweise durch ein Alumoxan in einen polymerisationsaktiven kationischen Metallocenkomplex überführen lassen (EP-A-129368).
Metallocene sind nicht nur hinsichtlich der Polymerisation von Olefinen von großem Interesse, sie können auch als Hydrier-, Epoxidierungs-, Isomerisierungs- und C-C-Kupplungskatalysatoren eingesetzt werden (Chem. Rev., 92 (1992), 965-994).

Die Herstellung von Metallocenen ist an sich bekannt (US 4,752,597; US 5,017,714; EP-A-320762; EP-A-416815; EP-A-537686; EP-A-669340; H.H. Brintzinger et al., Angew. Chem., 107 (1995), 1255; H.H. Brintzinger et al., J. Organomet. Chem. 232 (1982), 233). Dazu können zum Beispiel Cyclopentadienyl-Metall-Verbindungen mit Halogeniden von Übergangsmetallen wie Titan, Zirkonium, Hafnium, Vanadium, Niob, Tantal, Chrom, Molybdän, Cer, Thorium oder Uran umgesetzt werden. Literaturbekannt ist weiterhin, daß Metallocene beispielsweise durch Reaktion von Cyclopentadienen mit Amiden der Gruppe 4 des Periodensystems der Elemente (PSE) erhalten werden können (US 5,597,935; R.F. Jordan et al., Organometallics, 15 (1996), 4030).

Es stellte sich die Aufgabe, ein Verfahren zur Herstellung von Metallocenen zu finden, das eine größere Anwendungsbreite besitzt und z.B. auch für die Darstellung von hochsubstituierten, sterisch anspruchsvollen Metallocenen geeignet ist.

Überraschenderweise wurde nun gefunden, daß diese Aufgabe durch Verwendung von speziellen Addukten der Formel (I) gelöst wird.

Gegenstand der Erfindung ist somit ein Verfahren zur Herstellung eines Metallocens, wobei eine Ligand-Ausgangsverbindung mit einem Addukt der Formel (I) umgesetzt wird,

M¹XₙDₐ (I)

worin M¹ Zirkonium bedeutet
X gleich oder verschieden, Halogen, C₁-C₁₀-Alkoxy, C₆-C₁₀-Aryloxy, C₁-C₁₀-Alkylsulfonat wie Mesylat, Triflat, Nonaflat, C₆-C₁₀-Arylsulfonat wie Tosylat, Benzolsulfonat, C₁-C₁₀-Alkylcarboxylat wie Acetat, Formiat, Oxalat oder 1,3-Dicarbonylat wie Acetylacetonat oder fluoriertes 1,3-Dicarbonylat ist, insbesondere Chlor, Brom, besonders bevorzugt Chlor,
n eine ganze Zahl ist und gleich 2, 3 oder 4 ist und der Oxidationszahl des Metalls M¹ entspricht,
a eine ganze oder gebrochene Zahl ist und 0 < a ≤ 4 ist, und a liegt bevorzugt zwischen 0,5 und 2,5 und ist insbesondere 1, 1,5 oder 2,
und D ein linearer, cyclischer oder verzweigter und mindestens zwei Sauerstoffatome enthaltender Oligo- oder Polyether bzw. ein mindestens zwei Schwefelatome enthaltender Oligo- oder Polythioether ist, beispielsweise Dimethoxymethan, Diethoxymethan, 1,2-Dimethoxyethan, 1,2-Diethoxyethan, 1,1,2,2-Tetramethoxyethan, Pentaerythrittetramethylether, Sorbithexamethylether, Diethylenglykoldimethylether, Diethylenglykoldiethylether 1,2,3-Propantrioltrimethylether, 1,2,3-Propantrioltriethylether, Triethylenglykoldimethylether, Tetraethylenglykoldimethylether, Pentaethylenglykoldimethylether, Polyethylenglykoldimethylether, 1,3-Propandioldimethyl-ether, 1,2-Dimethoxycyclohexan, 1,2-Dimethoxybenzol, Kronenether wie 18-Crown-6, Dibenzo-18-crown-6, 15-Crown-5, 12-Crown-4, Dimethylthioglykol, Trimethylthioglycerin, Thia-18-Crown-6, Dimethylethylenthioglycol, insbesondere 1,2-Dimethoxyethan, wobei das Addukt der Formel (I) separat synthetisiert wird.

Erläuternde, die Erfindung jedoch nicht einschränkende Beispiele für Addukte der Formel (I) sind:
ZrCl₄(1,2-Dimethoxyethan)
ZrCl₄(Dimethylthioglykol)
ZrCl₄(1,2-Diethoxyethan)
ZrCl₄(1,3-Dimethoxypropan)
ZrCl₄(Dimethyl-1,3-thiopropandiol)
ZrCl₄(18-Crown-6)
ZrCl₄(Dibenzo-18-Crown-6)
ZrCl₄(1,2-Dimethoxycyclohexan)
ZrCl₄(1,2-Dimethoxybenzol)
ZrCl₄(Diethylenglykoldimethylether)
ZrCl₄(1,2,3-Propantrioltriethylether)
ZrCl₄(Trimethylthioglycerin)
ZrCl₄(Triethylenglykoldimethylether)
ZrCl₄(Tetraethylenglykoldimethylether)
ZrCl₂(O-iso-Propyl)₂(1,2-Dimethoxyethan)
ZrCl₂(O-Ethyl)₂(1,2-Dimethoxyethan)
ZrCl₄(Penterythrittetramethylether)

ZrBr₄(1,2-Dimethoxyethan)
ZrBr₄(Diethylenglykoldimethylether)
ZrBr₄(1,2,3-Propantrioltriethylether)
ZrBr₄(Triethylenglykoldimethylether)
ZrBr₄(Tetraethylenglykoldimethylether)

Zr(O-iso-Propyl)₄(1,2-Dimethoxyethan)
Zr(O-Phenyl)₄(1,2-Dimethoxyethan)
Zr(OEt)₄(Diethylenglykoldimethylether)
Zr(O-tert.-Butyl)₄(1,2,3-Propantrioltriethylether)
Zr(O-iso-Propyl)₄(Triethylenglykoldimethylether)
Zr(OMe)₄(Tetraethylenglykoldimethylether)
Zr(OMe)₄(1,2-Dimethoxyethan)

Addukte der Formel (I) können aus Übergangsmetallverbindungen der Formel (la) hergestellt werden,

M¹Xₙ (Ia)

wobei M¹, X und n dieselbe Bedeutung haben wie in Formel (I), durch Umsetzung mit einem Oligo- oder Polyether bzw. einem Oligo- oder Polythioether D. D ist ein linearer, cyclischer oder verzweigter und mindestens zwei Sauerstoffatome enthaltender Oligo- oder Polyether bzw. ein mindestens zwei Schwefelatome enthaltender Oligo- oder Polythioether ist, beispielsweise Dimethoxymethan, Diethoxymethan, 1,2-Dimethoxyethan, 1,2-Diethoxyethan, 1,1,2,2-Tetramethoxyethan, Pentaerythrittetramethylether, Sorbithexamethylether, Diethylenglykoldimethylether, Diethylenglykoldiethylether 1,2,3-Propantrioltrimethylether, 1,2,3-Propantrioltriethylether, Triethylenglykoldimethylether, Tetraethylenglykoldimethylether, Pentaethylenglykoldimethylether, Polyethylenglykoldimethylether, 1,3-Propandioldimethyl-ether, 1,2-Dimethoxycyclohexan, 1,2-Dimethoxybenzol, Kronenether wie 18-Crown-6, Dibenzo-18-crown-6, 15-Crown-5, 12-Crown-4, Dimethylthioglykol, Trimethylthioglycerin, Thia-18-Crown-6, Dimethylethylenthioglykol, insbesondere 1,2-Dimethoxyethan in einem inerten Solvens dargestellt.

Die Addukte der Formel (I) können separat synthetisiert und isoliert werden. Das molare Verhältnis von Metall M¹ zu Oligo-/Polyether bzw. Oligo-/Polythioether bei dieser Umsetzung liegt im allgemeinen zwischen 100 und 0,01, bevorzugt zwischen 10 und 0,5.

Nach dem erfindungsgemäßen Verfahren können verschiedene Metallocentypen hergestellt werden, beispielweise verbrückte oder unverbrückte Biscyclopentadienylkomplexe, wie sie z.B. in EP 129 368, EP 561 479, EP 545 304 und EP 576 970 beschrieben sind, Monocyclopentadienylkomplexe wie verbrückte Amidocyclopentadienylkomplexe, die z.B. in EP 416 815 beschrieben sind, mehrkernige Cyclopentadienylkomplexe wie in EP 632 063 beschrieben, π-Ligand substituierte Tetrahydropentalene wie in EP 659 758 beschrieben oder π-Ligand substituierte Tetrahydroindene wie in EP 661 300 beschrieben.

Bevorzugt hergestellt werden Metallocene der Formel (II), 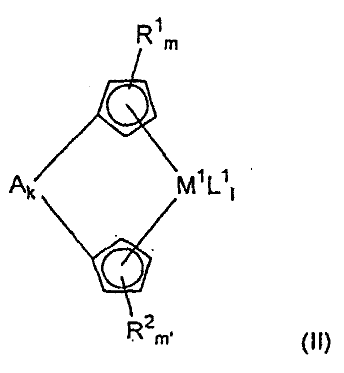 worin M¹ Zirkonium ist,
L¹ gleich oder verschieden sind und ein Halogenatom, bevorzugt Chlor, eine C₁-C₂₀-. kohlenstoffhaltige Gruppe bedeuten, wie beispielsweise eine C₁-C₂₀-Alkoxygruppe oder eine C₁-C₂₀-Aryloxygruppe, und L¹ miteinander ein Ringsystem mit M¹ bilden können,
l 2 ist,
R¹ und R² unabhängig voneinander gleich oder verschieden sind und ein Wasserstoffatom, Halogen, eine C₁-C₄₀-kohlenstoffhaltige Gruppe wie (C₁-C₂₀)Alkyl, insbesondere eine Methylgruppe, Ethylgruppe, Propyl, Isopropyl, Butyl, sec.-Butyl, tert.-Butyl, Cyclohexyl, (C₆-C₂₄)Aryl, das seinerseits substituiert sein kann, insbesondere eine Phenyl- oder Naphthylgruppe, (C₂-C₂₄)Heteroaryl wie Pyridyl, Furyl, Thienyl, Pyrimidinyl, Chinolyl, (C₁-C₁₀)Alkoxy, (C₂-C₁₀)Alkenyl, (C₇-C₂₀)Arylalkyl, (C₇-C₂₀)Alkylaryl, (C₆-C₁₈)Aryloxy, (C₁-C₁₀)Halogenalkyl, (C₆-C₁₀)Halogenaryl, (C₂-C₁₀)Alkinyl, C₃-C₂₀-Alkylsilyl- wie Trimethylsilyl, Triethylsilyl, tert.-Butyldimethylsilyl, Triisopropylsilyl, C₃-C₂₀-Arylsilyl- wie Triphenylsilyl, oder C₃-C₂₀-Alkylarylsilyl- wie Dimethylphenylsilyl, Diphenylmethylsilyl oder Diphenyl-tertbutylsilyl bedeuten und R¹ und R² jeweils mit den sie verbindenden Atomen des Cyclopentadienylringes ein mono- oder polycyclisches C₃-C₂₅-Ringsystem bilden können, insbesondere ein Indenyl-, Fluorenyl-, Benzindenyl oder Acenaphthindenyl-System, welches seinerseites substituiert sein kann, und R¹ und R² jeweils mit A ein Ringsystem bilden können,
m gleich 5 für k = 0 und m gleich 4 für k = 1 ist,
m' gleich 5 für k = 0 und m' gleich 4 für k = 1 ist,
k gleich Null oder 1 ist, wobei für k = 0 ein unverbrücktes Metallocen, für k = 1 ein verbrücktes Metallocen vorliegt,
A eine Verbrückung ist, wie beispielsweise 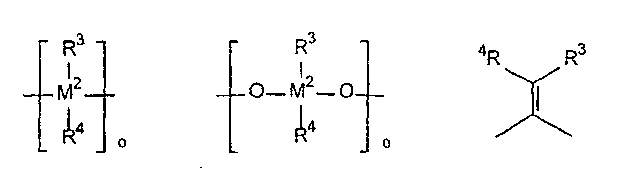 oder =BR³, AIR³, -S-, -SO-, -SO₂-, =NR³, =PR³, =P(O)R³, o-Phenylen, 2,2'-Biphenylen,
wobei M² Kohlenstoff, Silizium, Germanium, Zinn, Stickstoff oder Phosphor ist, bevorzugt Kohlenstoff, Silizium oder Germanium, insbesondere Kohlenstoff oder Silizium, und A mit einem oder mehreren Resten R¹ und/oder R² ein mono- oder polycyclisches Ringsystem bilden kann,
o gleich 1, 2, 3 oder 4 ist, bevorzugt 1 oder 2,
R³ und R⁴ unabhängig voneinander gleich oder verschieden ein Wasserstoffatom, Halogen, eine C₁-C₂₀-kohlenstoffhaltige Gruppe wie (C₁-C₂₀)Alkyl, insbesondere eine Methylgruppe, (C₆-C₁₄)Aryl, insbesondere eine Phenyl- oder Naphthylgruppe, (C₁-C₁₀)Alkoxy, (C₂-C₁₀)Alkenyl, (C₇-C₂₀)Arylalkyl, (C₇-C₂₀)Alkylaryl, (C₆-C₁₀)Aryloxy, (C₁-C₁₀)Fluoralkyl, (C₆-C₁₀)Halogenaryl, (C₂-C₁₀)Alkinyl, C₃-C₂₀-Alkylsilyl- wie beispielsweise Trimethylsilyl, Triethylsilyl, tert.-Butyldimethylsilyl, C₃-C₂₀-Arylsilyl- wie beispielsweise Triphenylsilyl, oder C₃-C₂₀-Alkylarylsilyl- wie beispielsweise Dimethylphenylsilyl, Diphenylsilyl oder Diphenyl-tert.-butylsilyl bedeuten und R³ und R⁴ ein mono- oder polycyclisches Ringsystem bilden können

Erläuternde, die Erfindung jedoch nicht einschränkende Beispiele für Metallocene sind:
Dimethylsilandiyl-bis-(indenyl)-zirkoniumdichlorid
Dimethylsilandiyl-bis-(2-methyl-indenyl)-zirkoniumdichlorid
Dimethylsilandiyl-bis-(2,4,6-trimethyl-indenyl)-zirkoniumdichlorid
Dimethylsilandiyl-bis-(2,5,6-trimethyl-indenyl)-zirkoniumdichlorid
Dimethylsilandiyl-bis-[1-(2-methyl-4-phenyl-indenyl)]-zirkoniumdichlorid
Dimethylsilandiyl-bis-[1-(2-methyl-indenyl)]-zirkoniumdichlorid
Dimethylsilandiyl-bis-[1-(2-methyl-4-(1-naphthyl)-indenyl)]-zirkoniumdichlorid
Dimethylsilandiyl-bis-[1-(2-methyl-4-(2-naphthyl)-indenyl)]-zirkoniumdichlorid
Dimethylsilandiyl-bis-[1-(2-methyl-4-mesityl-indenyl)]-zirkoniumdichlorid
Dimethylsilandiyl-bis-[1-(2-methyl-4-(2-methyl-phenyl)-indenyl)]-zirkoniumdichlorid
Dimethylsilandiyl-bis-[1-(2-methyl-4-(2,3-dimethyl-phenyl)-indenyl)]-zirkoniumdichlorid
Dimethylsilandiyl-bis-[1-(2-methyl-4-(2,5-dimethyl-phenyl)-indenyl)]-zirkoniumdichlorid
Dimethylsilandiyl-bis-[1-(2-methyl-4-(2,6-dimethyl-phenyl)-indenyl)]-zirkoniumdichlorid
Dimethylsilandiyl-bis-[1-(2-methyl-4-(2,3-diethyl-phenyl)-indenyl)]-zirkoniumdichlorid
Dimethylsilandiyl-bis-[1-(2-methyl-4-(3,5-dimethyl-phenyl)-indenyl)]-zirkoniumdichlorid
Dimethylsilandiyl-bis-[1-(2-methyl-4-(2-biphenyl)-indenyl)]-zirkoniumdichlorid
Dimethylsilandiyl-bis-[1-(2-methyl-4-(4-biphenyl)-indenyl)]-zirkoniumdichlorid
Dimethylsilandiyl-bis-[1-(2-methyl-4-(3,5-diphenyl-phenyl)-indenyl)]-zirkoniumdichlorid
Dimethylsilandiyl-bis-[1-(2-methyl-4-(3,5-diisopropyl-phenyl)-indenyl)]-zirkoniumdichlorid
Dimethylsilandiyl-bis-[1-(2-methyl-4-(2,4,6-trimethoxy-phenyl)-indenyl)]-zirkoniumdichlorid
Dimethylsilandiyl-bis-[1-(2-methyl-4-(4-N,N-dimethylamino-phenyl)-indenyl)]-zirkoniumdichlorid
Dimethylsilandiyl-bis-[1-(2-methyl-4-(3-N,N-dimethylamino-phenyl)-indenyl)]-zirkoniumdichlorid
Dimethylsilandiyl-bis-[1-(2-methyl-4-(2-N,N-dimethylamino-phenyl)-indenyl)]-zirkoniumdichlorid
Dimethylsilandiyl-bis-[1-(2-methyl-4-(4-trifluormethyl-phenyl)-indenyl)]-zirkoniumdichlorid
Dimethylsilandiyl-bis-[1-(2-methyl-4-(3-trifluormethyl-phenyl)-indenyl)]-zirkoniumdichlorid
Dimethylsilandiyl-bis-[1-(2-methyl-4-(2-trifluormethyl-phenyl)-indenyl)]-zirkoniumdichlorid
Dimethylsilandiyl-bis-[1-(2-methyl-4-(3,5-bis-(trifluormethyl)-phenyl)-indenyl)]-zirkoniumdichlorid
Dimethylsilandiyl-bis-[1-(2-methyl-4-(2,4-bis-(trifluormethyl)-phenyl)-indenyl)]-zirkoniumdichlorid
Dimethylsilandiyl-bis-[1-(2-methyl-4,5-benzoindenyl)]-zirkoniumdichlorid
Dimethylsilandiyl-bis-[1-(2-methyl-α-acenaphthindenyl)]-zirkoniumdichlorid
Dimethylsilandiyl-bis-[1-(2-methyl-4,6-diisopropyl-indenyl)]-zirkoniumdichlorid
Dimethylsilandiyl-bis-[1-(2-ethyl-4-phenyl-indenyl)]-zirkoniumdichlorid
Dimethylsilandiyl-bis-[1-(2-ethyl-4-naphthyl-indenyl)]-zirkoniumdichlorid

Dimethylsilandiyl-bis-[1-(2-isopropyl-4-phenyl-indenyl)]-zirkoniumdichlorid
Dimethylsilandiyl-bis-[1-(2-isopropyl-4-(1-naphthyl)-indenyl)]-zirkoniumdichlorid
Dimethylsilandiyl-bis-[1-(2-isopropyl-4-(2-naphthyl)-indenyl)]-zirkoniumdichlorid
Dimethylsilandiyl-bis-[1-(2-isopropyl-4-(4-methyl-phenyl)-indenyl)]-zirkoniumdichlorid
Dimethylsilandiyl-bis-[1-(2-isopropyl-4-(3,5-dimethyl-phenyl)-indenyl)]-zirkoniumdichlorid
Dimethylsilandiyl-bis-[1-(2-isopropyl-4-(4-trifluormethyl-phenyl)-indenyl)]-zirkoniumdichlorid
Dimethylsilandiyl-bis-[1-(2-isopropyl-4-(3,5-bis-(trifluormethyl)-phenyl)-indenyl)]-zirkoniumdichlorid
Dimethylsilandiyl-bis-[1-(2-isopropyl-4-(4-methoxy-phenyl)-indenyl)]-zirkoniumdichlorid
Dimethylsilandiyl-bis-[1-(2-isopropyl-4-(2-furyl)-indenyl)]-zirkoniumdichlorid

Dimethylsilandiyl-bis-[1-(2-cyclohexyl-4-(1-naphthyl)-indenyl)]-zirkoniumdichlorid
Dimethylsilandiyl-bis-[1-(2-cyclohexyl-4-phenyl-indenyl)]-zirkoniumdichlorid
Dimethylsilandiyl-bis-[1-(2,4-diphenyl-indenyl)]-zirkoniumdichlorid
Dimethylsilandiyl-bis-[1-(2,4-dicyclohexyl-indenyl)]-zirkoniumdichlorid

Dimethylsilandiylbis(2,3,5-trimethyl-cyclopentadienyl)zirkoniumdichlorid
Dimethylsilandiylbis(2-methyl-4-tert.-butyl-cyclopentadienyl)zirkoniumdichlorid
Dimethylsilandiylbis(fluorenyl)-zirkoniumdichlorid

Methylphenylsilandiyl-bis[1-(2-methyl-4-phenyl-indenyl)]-zirkoniumdichlorid
Methylphenylsilandiyl-bis[1-(2-methyl-4-naphthyl-lndenyl)]-zirkoniumdichlorid
Methylphenylsilandlyl-bis[1-(2-methyl-4-(2,3-dimethyl-phenyl)-indenyl)]-zirkoniumdichlorid

Diphenylsilandiyl-bis(1-indenyl)-zirkoniumdichlorid
Diphenylsilandiyl-bis[1-(2-methyl-indenyl)]-zirkoniumdichlorid
Diphenylsilandiyl-bis[1-(2-methyl-4-phenyl-indenyl)]-zirkoniumdichlorid
Diphenylsilandiyl-bis[1-(2-methyl-4-naphthyl-indenyl)]-zirkoniumdichlorid
Diphenylsilandiyl-bis[1-(2-methyl-4-(2,3-dimethyl-phenyl)-indenyl)]-zirkoniumdichlorid
1,2-Ethandiyl-bis-[1-(2-methyl-4-phenyl-indenyl)]-zirkoniumdichlorid
1,2-Ethandiyl-bis-[1-(2-methyl-4-(1-naphthyl)-indenyl)]-zirkoniumdichlorid
1,2-Ethandiyl-bis-[1-(2-methyl-4-(2,3-dimethylphenyl)-indenyl)]-zirkoniumdichlorid
1,2-Ethandiyl-bis-[1-(2-cyclohexyl-4-phenyl-indenyl)]-zirkoniumdichlorid
1,2-Ethandiyl-bis-[1-(2-methyl-4-(3,5-bis(trifluormethyl)phenyl-indenyl)]-zirkoniumdichlorid
1,2-Ethandiyl-bis-(fluorenyl)-zirkoniumdichlorid
1,2-Ethandiyl-bis(2,3,5-trimethyl-cyclopentadienyl)zirkoniumdichlorid
1,2-Ethandiyl-bis(2-methyl-4-tert.-butyl-cyclopentadienyl)zirkoniumdichlorid

1,2-Butandiyl-bis-[1-(2-methyl-4-phenyl-indenyl)]-zirkoniumdichlorid
1,2-Butandiyl-bis-[1-(2-methyl-4-(1-naphthyl)-indenyl)]-zirkoniumdichlorid
1,2-Butandiyl-bis-[1-(2-methyl-4-(2-naphthyl)-indenyl)]-zirkoniumdichlorid
1,2-Butandiyl-bis-[1-(2-ethyl-4-(3, 5-bis(trifluormethyl)phenyl-indenyl)]-zirkoniumdichlorid

lsopropyliden-bis-[1-(2-methyl-4-phenyl-indenyl)]-zirkoniumdichlorid
isopropyliden-bis-[1-(2-methyl-4-(2,3-dimethyl-phenyl-indenyl)]-zirkoniumdimethyl
lsopropyliden-bis-[1-(2-methyl-4-(1-naphthyl)-indenyl)]-zirkoniumdichlorid
Isopropyliden-bis-[1-(2-cyclohexyl-4-phenyl)-indenyl)]-zirkoniumdichlorid
isopropyliden-bis-[1-(2-methyl-4-(3,5-bis(trifluormethyl)phenyl-indenyl)]-zirkoniumdichlorid
Isopropyliden-bis-(fluorenyl)-zirkoniumdichlorid
lsopropyliden-(indenyl)-(fluorenyl)-zirkoniumdichlorid
Isopropyliden-(cyclopentadienyl)-(fluorenyl)-zirkoniumdichlorid
lsopropyliden-(cyclopentadienyl)-(indenyl)-zirkoniumdichlorid
Isopropyliden-bis-(2-methyl-4-tert.-butyl-cyclopentadienyl)zirkoniumdichlorid

Bis-(cyclopentadienyl)-zirkoniumdichlorid
Bis-(n-butyl-cyclopentadienyl)-zirkoniumdichlorid
Bis-(1,3-dimethylcyclopentadienyl)-zirkoniumdichlorid
Bis-(pentamethylcyclopentadienyl)-zirkoniumdichlorid
Bis-(indenyl)-zirkoniumdichlorid
Bis-(fluorenyl)-zirkoniumdichlorid
Bis-[2-methyl-4-phenyl-indenyl]-zirkoniumdichlorid
Bis-[2-methyl-4-(2,3-dimethyl-phenyl)-indenyl]-zirkoniumdichlorid
Bis-[2-methyl-4-(1-naphthyl)-indenyll-zirkoniumdichlorid
Bis-[2-methyl-4-mesityl-indenyl]-zirkoniumdichlorid
Bis-[2-ethyl-4-(3,5-bis(trifluormethyl)phenyl)-indenyl]-zirkoniumdichlorid
Bis-[2-cyclohexyl-4-phenyl-indenyl]-zirkoniumdichlorid

[4-(η⁵-Cyclopentadienyl)-4,6,6-trimethyl-(η⁵-4,5,6,7-tetrahydropentalenyl)]-zirkoniumdichlorid
[4-(η⁵-3'-Trimethylsilyl-cyclopentadienyl)-4,6,6-trimethyl-(η⁵-4,5,6,7-tetrahydropentalenyl)]-zirkoniumdichlorid
[4-(η⁵-3'-Isopropyl-cyclopentadienyl)-4,6,6-trimethyl-(η⁵-4,5,6,7-tetrahydropentalenyl)]-zirkoniumdichlorid
(4-(η⁵-Fluorenyl)-4-methyl-6-phenyl-(η⁵-4,5,6,7-tetrahydropentalenyl)]-zirkoniumdichlorid
[4-(η⁵-Indenyl)-4-methyl-6-phenyl-(η⁵-4,5,6,7-tetrahydropentalenyl)]-zirkoniumdichlorid
[4-(η⁵-Cyclopentadienyl)-4,7,7-trimethyl-(η⁵-4,5,6,7-tetrahydroindenyl)]-zirkoniumdichlorid
(4-(η⁵-3'-tert.-Butyl-cyclopentadienyl)-4,7,7-trimethyl-(η⁵-4,5,6,7-tetrahydroindenyl)]-zirkoniumdichlorid
[4-(η⁵-3-Isopropyl-cyclopentadienyl)-4,7,7-trimethyl-(η⁵-4,5,6,7-tetrahydroindenyl)]-zirkoniumdichlorid
[4-(η⁵-3'-Trimethylsilyl-cyclopentadienyl)-4,7,7-trimethyl-(η⁵-4,5,6,7-tetrahydroindenyl)]-zirkoniumdichlorid
[4-(η⁵-3'-Methyl-cyclopentadienyl)-4,7,7-trimethyl-(η⁵-4,5,6,7-tetrahydroindenyl)]-zirkoniumdichlorid
[4-(η⁵-3'-Methyl-cyclopentadienyl)-2,4,7,7-tetramethyl-(η⁵-4,5,6,7-tetrahydroindenyl)]-zirkoniumdichlorid
Tetrachloro-[1-(bis(η⁵-1H-inden-1-yliden)methylsilyl)-3-η⁵-cyclopenta-2,4-dien-1-yliden)-3-η⁵-9H-fluoren-9-yliden)butan]di-zirkonium

Für die Herstellung von Metallocenen werden bei dem erfindungsgemäßen Verfahren Ligandausgangsverbindungen wie Cyclopentadienverbindungen eingesetzt, beispielsweise Cyclopentadien-, Inden- oder Fluoren-Derivate. Diese lassen sich mit Basen deprotonieren, und die korrespondierenden Anionen binden als Liganden an Übergangsmetalle, unter Ausbildung von Metallocenen.

Als Ligandausgangsverbindungen zur Herstellung von Metallocenen nach dem erfindungsgemäßen Verfahren werden bevorzugt Verbindungen der Formel (III) verwendet, 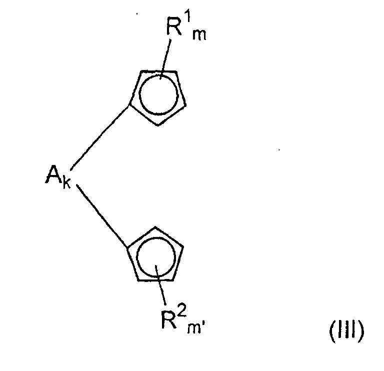 worin A, k, R¹, R², m und m' dieselbe Bedeutung haben wie in Formel (II).

Erläuternde, die Erfindung jedoch nicht einschränkende Beispiele für Verbindungen der Formel (III) sind:
Dimethyl-bis-(indenyl)-silan
Dimethyl-bis-(2-methyl-indenyl)-silan
Dimethyl-bis-(2,4,6-trimethyl-indenyl)-silan
Dimethyl-bis-(2,5,6-trimethyl-indenyl)-silan
Dimethyl-bis-[1-(2-methyl-4-phenyl-indenyl)]-silan
Dimethyl-bis-[1-(2-methyl-indenyl)]-silan
Dimethyl-bis-[1-(2-methyl-4-(1-naphthyl)-indenyl)]-silan
Dimethyl-bis-[1-(2-methyl-4-(2-naphthyl)-indenyl)]-silan
Dimethyl-bis-[1-(2-methyl-4-mesityl-indenyl)]-silan
Dimethyl-bis-[1-(2-methyl-4-(2-methyl-phenyl)-indenyl)]-silan
Dimethyl-bis-[1-(2-methyl-4-(2,3-dimethyl-phenyl)-indenyl)]-silan
Dimethyl-bis-[1-(2-methyl-4-(2,5-dimethyl-phenyl)-indenyl)]-silan
Dimethyl-bis-[1-(2-methyl-4-(2,6-dimethyl-phenyl)-indenyl)]-silan
Dimethyl-bis-[1-(2-methyl-4-(2,3-diethyl-phenyl)-indenyl)]-silan
Dimethyl-bis-[1-(2-methyl-4-(3,5-dimethyl-phenyl)-indenyl)]-silan
Dimethyl-bis-[1-(2-methyl-4-(2-biphenyl)-indenyl)]-silan
Dimethyl-bis-[1-(2-methyl-4-(4-biphenyl)-indenyl)]-silan
Dimethyl-bis-[1-(2-methyl-4-(3,5-diphenyl-phenyl)-indenyl)]-silan
Dimethyl-bis-[1-(2-methyl-4-(3,5-diisopropyl-phenyl)-indenyl)]-silan
Dimethyl-bis-[1-(2-methyl-4-(2,4,6-trimethoxy-phenyl)-indenyl)]-silan
Dimethyl-bis-[1-(2-methyl-4-(4-N,N-dimethylamino-phenyl)-indenyl)]-silan
Dimethyl-bis-[1-(2-methyl-4-(3-N,N-dimethylamino-phenyl)-indenyl)]-silan
Dimethyl-bis-[1-(2-methyl-4-(2-N,N-dimethylamino-phenyl)-indenyl)]-silan
Dimethyl-bis-[1-(2-methyl-4-(4-trifluormethyl-phenyl)-indenyl)]-silan
Dimethyl-bis-[1-(2-methyl-4-(3-trifluormethyl-phenyl)-indenyl)]-silan
Dimethyl-bis-[1-(2-methyl-4-(2-trifluormethyl-phenyl)-indenyl)]-silan
Dimethyl-bis-[1-(2-methyl-4-(3,5-bis-(trifluormethyl)-phenyl)-indenyl)]-silan
Dimethyl-bis-[1-(2-methyl-4-(2,4-bis-(trifluormethyl)-phenyl)-indenyl)]- silan
Dimethyl-bis-(1-(2-methyl-4,5-benzoindenyl)]-silan
Dimethyl-bis-[1-(2-methyl-α-acenaphthindenyl)]-silan
Dimethyl-bis-[1-(2-methyl-4,6-diisopropyl-indenyl)]-silan
Dimethyl-bis-[1-(2-ethyl-4-phenyl-indenyl)]-silan
Dimethyl-bis-[1-(2-ethyl-4-naphthyl-indenyl)]-silan

Dimethyl-bis-[1-(2-isopropyl-4-phenyl-indenyl)]-silan
Dimethyl-bis-[1-(2-isopropyl-4-(1-naphthyl)-indenyl)]-silan
Dimethyl-bis-[1-(2-isopropyl-4-(2-naphthyl)-indenyl)]-silan
Dimethyl-bis-[1-(2-isopropyl-4-(4-methyl-phenyl)-indenyl)]-silan
Dimethyl-bis-[1-(2-isopropyl-4-(3,5-dimethyl-phenyl)-indenyl)]-silan
Dimethyl-bis-[1-(2-isopropyl-4-(4-trifluormethyl-phenyl)-indenyl)]-silan
Dimethyl-bis-[1-(2-isopropyl-4-(3,5-bis-(trifluormethyl)-phenyl)-indenyl)]-silan
Dimethyl-bis-[1-(2-isopropyl-4-(4-methoxy-phenyl)-indenyl)]-silan
Dimethyl-bis-[1-(2-isopropyl-4-(2-furyl)-indenyl)]-silan

Dimethyl-bis-[1-(2-cyclohexyl-4-(1-naphthyl)-indenyl)]-silan
Dimethyl-bis-[1-(2-cyclohexyl-4-phenyl-indenyl)]-silan
Dimethyl-bis-[1-(2,4-diphenyl-indenyl)]-silan
Dimethyl-bis-[1-(2,4-dicyclohexyl-indenyl)]-silan
Dimethylbis(2,3,5-trimethyl-cyclopentadienyl)silan
Dimethylbis(2-methyl-4-tert.-butyl-cyclopentadienyl)silan
Dimethylbis(fluorenyl)-silan

Methylphenyl-bis[1-(2-methyl-4-phenyl-indenyl)]-silan
Methylphenyl-bis[1-(2-methyl-4-naphthyl-indenyl)]-silan
Methylphenyl-bis[1-(2-methyl-4-(2,3-dimethyl-phenyl)-indenyl)]-silan

Diphenyl-bis(1-indenyl)-silan
Diphenyl-bis[1-(2-methyl-indenyl)]-silan
Diphenyl-bis[1-(2-methyl-4-phenyl-indenyl)]-silan
Diphenyl-bis[1-(2-methyl-4-naphthyl-indenyl)]-silan
Diphenyl-bis[1-(2-methyl-4-(2,3-dimethyl-phenyl)-indenyl)]-silan

1,2-bis-[1-(2-methyl-4-phenyl-indenyl)]-ethan
1,2-bis-[1-(2-methyl-4-(1-naphthyl)-indenyl)]-ethan
1,2-bis-[1-(2-methyl-4-(2,3-dimethylphenyl)-indenyl)]-ethan
1,2-bis-[1-(2-cyclohexyl-4-phenyl-indenyl)]-ethan
1,2-bis-[1-(2-methyl-4-(3,5-bis(trifluormethyl)phenyl-indenyl)]-ethan
1,2-bis-(fluorenyl)-ethan
1,2-bis(2,3,5-trimethyl-cyclopentadienyl)ethan
1,2-bis(2-methyl-4-tert.-butyl-cyclopentadienyl)ethan

1,2-bis-[1-(2-methyl-4-phenyl-indenyl)]-butan
1,2-bis-[1-(2-methyl-4-(1-naphthyl)-indenyl)]-butan
1,2-bis-[1-(2-methyl-4-(2-naphthyl)-indenyl)]-butan
1,2-bis-[1-(2-ethyl-4-(3,5-bis(trifluormethyl)phenyl-indenyl)]-butan

2,2-bis-[1-(2-methyl-4-phenyl-indenyl)]-propan
2,2-bis-[1-(2-methyl-4-(2,3-dimethyl-phenyl-indenyl)]-zirkoniumdimethyl
2,2-bis-[1-(2-methyl-4-(1-naphthyl)-indenyl)]-propan
2,2-bis-[1-(2-cyclohexyl-4-phenyl)-indenyl)]-propan
2,2-bis-[1-(2-methyl-4-(3,5-bis(trifluormethyl)phenyl-indenyl)]-propan
2,2-bis-(fluorenyl)-propan
2-(indenyl)-2-(fluorenyl)-propan
2-(cyclopentadienyl)-2-(fluorenyl)-propan
2-(cyclopentadienyl)-2-(indenyl)-propan

[4-(Cyclopentadienyl)-4,6,6-trimethyl-(η⁵-4,5,6,7-tetrahydropentalen)]
[4-(3'-Trimethylsilyl-cyclopentadienyl)-4,6,6-trimethyl-(η⁵-4,5,6,7-tetrahydropentalen)]
[4-(3'-Isopropyl-cyclopentadienyl)-4,6,6-trimethyl-(η⁵-4,5,6,7-tetrahydropentalen)]
[4-(Fluorenyl)-4-methyl-6-phenyl-(η⁵-4,5,6,7-tetrahydropentalen)]
[4-(Indenyl)-4-methyl-6-phenyl-(η⁵-4,5,6,7-tetrahydropentalen)]
[4-(Cyclopentadienyl)-4,7,7-trimethyl-(η⁵-4,5,6,7-tetrahydroinden)]
[4-(3'-tert.-Butyl-cyclopentadienyl)-4,7,7-trimethyl-(η⁵-4,5,6,7-tetrahydroinden)]
[4-(3-Isopropyl-cyclopentadienyl)-4,7,7-trimethyl-(η⁵-4,5,6,7-tetrahydroinden)]
[4-(3'-Trimethylsilyl-cyclopentadienyl)-4,7,7-trimethyl-(η⁵-4,5,6,7-tetrahydroinden)]
[4-(3'-Methyl-cyclopentadienyl)-4,7,7-trimethyl-(η⁵-4,5,6,7-tetrahydroinden)]
[4-(3'-Methyl-cyclopentadienyl)-2,4,7,7-tetramethyl-(η⁵-4,5,6,7-tetrahydroinden)]
Dimethyl-(tert.-butylamido)-(tetramethyl-η⁵-cyclopentadienyl)-silan
1-(tert.-Butylamido)-2-(tetramethyl-η⁵-cyclopentadienyl)-ethan
Dimethyl-(methylamido)-(tetramethyl-η⁵-cyclopentadienyl)-silan
1-(Methylamido)-2-(tetramethyl-η⁵-cyclopentadienyl)-ethan
Dimethyl-(tert.-butylamido)-(2,4-dimethyl-2,4-pentadienyl)-silan
[1-(Bis(1H-inden-1-yliden)methylsilyl)-3-η⁵-cyclopenta-2,4-dien-1-yliden)-3-η⁵-9Hfluoren-9-yliden)butan]

Die Herstellung von Metallocenen erfolgt nach dem erfindungsgemäßen Verfahren bevorzugt durch Deprotonierung von geeigneten Ligand-Ausgangsverbindungen, wie beipielsweise Verbindungen der Formel (III), mit Basen in einem inerten Lösungsmittel oder Lösungsmittelgemisch und anschließender Umsetzung mit einem Addukt der Formel (I), welches separat dargestellt und als isolierte Verbindung eingesetzt werden kann. Bevorzugt werden Metallocene der Formel (II) aus Ligand-Ausgangsverbindungen der Formel (III) hergestellt, wie in folgendem Reaktionsschema in nicht einschränkender Weise erläutert, 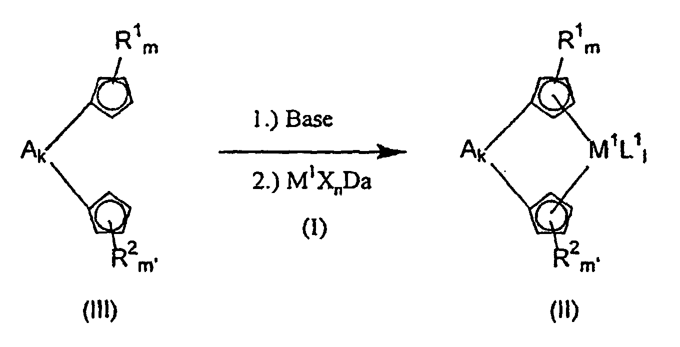 wobei A, k, R¹, R², m, m', M¹, X, n, D, a, L¹ und l definiert sind wie in Formel (I) und (II).

Nicht einschränkende Beispiele für geeignete Basen sind Organolithium-Verbindungen wie n-Butyllithium, sec.-Butyllithium, tert.-Butyllithium, Methyllithium, Organomagnesium-Verbindungen wie Dibutylmagnesium, Butyloctyl-magnesium, Grignard-Verbindungen, Alkalimetalle wie Natrium, Kalium, Alkalimetallhydride wie Lithiumhydrid, Natriumhydrid, Kaliumhydrid oder Alkalimetallamide wie Lithiumamid, Natriumamid, Kaliumamid, Natriumhexamethyldisilazid, Kaliumhexamethyldisilazid, Lithiumhexamethyl-disilazid, Lithiumdiisopropylamid, Lithiumdiethylämid.

Geeignete inerte Lösungsmittel sind aliphatische oder aromatische Kohlenwasserstoffe wie beispielsweise Toluol, Xylol, Benzol, Mesitylen, Pentan, Hexan, Heptan, Cyclohexan, halogenierte Kohlenwasserstoffen wie beispielsweise 1,2-Dichlorethan, o-Dichlorbenzol, Trichloethylen, Dichlormethan, Ether wie beispielsweise Diethylether, Dibutylether, Methyl-tert.-butylether, Anisol, THF, Dioxan, 1,2-Dimethoxyethan (DME), Diglyme sowie beliebige Gemische aus diesen.

Das erfindungsgemäße Verfahren wird im allgemeinen in einem Temperaturbereich von -120°C bis +300°C durchgeführt, bevorzugt in einem Temperaturbereich von -78°C bis +150°C, besonders bevorzugt bei einer Temperatur zwischen 0°C und 120°C.

Das moiare Verhältnis zwischen den oben beschriebenen geeigneten Basen und Ligand-Ausgangsverbindungen wie beispielsweise Verbindungen der Formel (III) liegt bei dem erfindungsgemäßen Verfahren im allgemeinen zwischen 10 und 0.1, bevorzugt zwischen 4 und 0.5, besonders bevorzugt zwischen 3 und 0.8.

Das molare Verhältnis zwischen Addukten der Formel (I) und Ligand-Ausgangsverbindungen wie beispielsweise Verbindungen der Formel (III) liegt bei dem erfindungsgemäßen Verfahren im allgemeinen zwischen 100 und 0.01, bevorzugt zwischen 10 und 0.1.

Die Konzentration an Ligand-Ausgangsverbindungen in der Reaktionsmischung liegt im allgemeinen zwischen 0,0001 mol/l und 8 mol/l, bevorzugt im Bereich 0,01 mol/l und 3 mol/l, besonders bevorzugt zwischen 0,1 mol/l und 2 mol/l.

Bevorzugt werden die Addukte der Formel (I) separat hergestellt und als isolierte Verbindungen im erfindungsgemäßen Verfahren eingesetzt.

Die Reaktionsdauer liegt im allgemeinen zwischen 5 Minuten und 1 Woche, bevorzugt im Bereich zwischen 15 Minuten und 48 Stunden.

Die nach dem erfindungsgemäßen Verfahren herstellbaren Metallocene sind hochaktive Katalysatorkomponenten für die Olefinpolymerisation. Je nach Substitutionsmuster der Liganden können die Metallocene als Isomerengemisch anfallen. Die Metallocene werden für die Polymerisation bevorzugt isomerenrein eingesetzt. Die Verwendung des Racemats ist in den meisten Fällen ausreichend.

Verwendet werden kann aber auch das reine Enantiomere in der (+)- oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen meist ein Polymer mit anderen Eigenschaften erzeugt. Für bestimmte Anwendungen, beispielsweise weiche Formkörper, kann dies durchaus wünschenswert sein.

Die in dem erfindungsgemäßen Verfahren erhaltenen Metallocene, insbesondere Metallocene der Formel (II) eignen sich zur Herstellung eines Polyolefins durch Polymerisation von mindestens einem Olefins in Gegenwart eines Katalysators der mindestens einen Cokatalysator und mindestens ein Metallocen enthält. Unter dem Begriff Polymerisation wird eine Homopolymerisation wie auch eine Copolymerisation verstanden.

Die in dem erfindungsgemäßen Verfahren hergestellten Metallocene, insbesondere Metallocene der Formel (II) können zur Polymerisation eines oder mehrere Olefine der Formel R^{α} -CH=CH-R^{β} verwendet werden, worin R^{α} und R^{β} gleich oder verschieden sind und ein Wasserstoffatom oder einen Kohlenwasserstoffrest mit 1 bis 20 C-Atomen, insbesondere 1 bis 10 C-Atomen, bedeuten, und R^{α} und R^{β} zusammen mit den sie verbindenen Atomen einen oder mehrere Ringe bilden können. Beispiele für solche Olefine sind 1-Olefine mit 2 bis 40, bevorzugt 2-10 C-Atomen, wie Ethylen, Propylen, 1-Buten, 1-Penten, 1-Hexen, 4-Methyl-1-penten oder 1-Octen, Styrol, Diene wie 1,3-Butadien, Isopren, 1,4-Hexadien oder cyclische Olefine wie Norbornen oder Ethylidennorbornen.
Bevorzugt werden Ethylen oder Propylen homopolymerisiert, oder Ethylen mit einem oder mehreren cyclischen Olefinen, wie Norbornen, und/oder einem oder mehreren acyclischen 1-Olefinen mit 3 bis 20 C-Atomen, wie Propylen, und/oder einem oder mehreren Dienen mit 4 bis 20 C-Atomen, wie 1,3-Butadien oder 1,4-Hexadien, copolymerisiert. Beispiele solcher Copolymere sind Ethylen/Norbornen-Copolymere, Ethylen/Propylen-Copolymere und Ethylen/Propylen/ 1,4-Hexadien-Copolymere.

Die Polymerisation wird bevorzugt bei einer Temperatur von -60 bis 250 C, besonders bevorzugt 50 bis 200 C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasen- und Lösungspolymerisation.

Bevorzugt enthält der eingesetzte Katalysator eine Metallocenverbindung. Es können auch Mischungen zweier oder mehrerer Metallocenverbindungen eingesetzt werden, z.B. zur Herstellung von Polyolefinen mit breiter oder multimodaler Molmassenverteilung.

Prinzipiell ist als Cokatalysator jede Verbindung geeignet, die aufgrund ihrer Lewis-Acidität das neutrale Metallocen in ein Kation überführen und dieses stabilisieren kann ("labile Koordination"). Darüber hinaus sollte der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R^{a}ₓNH₄₋ₓBR^{b}₄, R^{a}ₓPH₄₋ₓBR^{b}₄, R^{a}₃CBR^{b}₄ oder BR^{b}₃, worin x eine Zahl von 1 bis 4, bevorzugt 3, bedeutet, die Reste R^{a} gleich oder verschieden, bevorzugt gleich sind, und C₁-C₁₀-Alkyl oder C₆-C₁₈-Aryl sind, oder zwei Reste R^{a} zusammen mit dem sie verbindenen Atomen einen Ring bilden, und die Reste R^{b} gleich oder verschieden, bevorzugt gleich sind, und C₆-C₁₈-Aryl sind, das durch Alkyl, Haloalkyl oder Fluor substituiert sein kann. Insbesondere steht R^{a} für Ethyl, Propyl, Butyl oder Phenyl und R^{b} für Phenyl, Pentafluorphenyl, 3,5-Bistrifluormethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel C für den linearen Typ und/oder der Formel D für den cyclischen Typ verwendet, 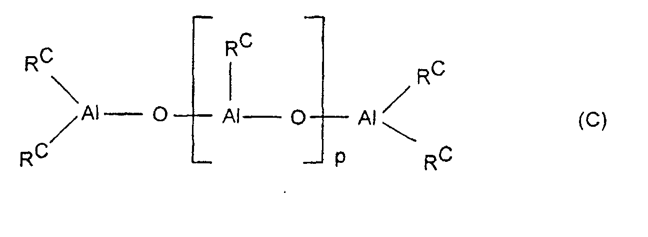 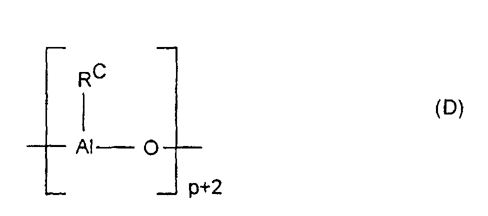 wobei in den Formeln C und D die Reste R^{C} gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.
Bevorzugt sind die Reste R^{C} gleich und bedeuten Wasserstoff, Methyl, Isobutyl, Phenyl oder Benzyl, besonders bevorzugt Methyl.

Sind die Reste R^{C} verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R^{C}) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bevorzugt bei einer Temperatur von -78° bis 100°C, vorzugsweise 0° bis 80°C.

Die Metallocenverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R^{C} werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.
Bevorzugt wird die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem Verfahren zur Herstellung eines Polyolefins kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP 578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf.

Im Prinzip sind jedoch auch andere Reaktoren geeignet.

Im vorstehend beschriebenen Reaktor mit 16 dm³ Volumen werden 5 dm³ Decan unter Inertbedingungen vorgelegt. 0,5 dm³ (=5,2 mol) Trimethylaluminium werden bei 25 C zugefügt. Danach werden 250 g Kieselgel SD 3216-30 (Grace AG), welche vorher bei 120 C in einem Argonfließbett getrocknet wurden, durch einen Feststofftrichter in den Reaktor eindosiert und mit Hilfe des Rührers und des Umpumpsystems homogen verteilt. Eine Gesamtmenge von 76,5 g Wasser wird in Portionen von 0,1 cm³ während 3,25 Stunden jeweils alle 15 Sekungen in den Reaktor gegeben. Der Druck, herrührend vom Argon und den entwickelten Gasen, wird durch ein Druckregelventil konstant bei 10 bar gehalten. Nachdem alles Wasser eingebracht worden ist, wird das Umpumpsystem abgeschaltet und das Rühren noch 5 Stunden bei 25 C fortgesetzt.

Der in dieser Weise hergestellte geträgerte Cokatalysator wird als eine 10 %ige Suspension in n-Decan eingesetzt. Der Aluminiumgehalt ist 1,06 mmol Al pro cm³ Suspension. Der isolierte Feststoff enthält 31 Gew.-% Aluminium, das Suspensionsmittel enthält 0,1 Gew.-% Aluminium.

Weitere Möglichkeiten der Herstellung eines geträgerten Cokatalysators sind in EP 578 838 beschrieben.

Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem erfolgt bei einer Temperatur von -20 bis +120°C, bevorzugt 0 bis 100°C, besonders bevorzugt bei 15 bis 40°C. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (enthaltend das erfindungsgemäße Metallocen und einen geträgerten Cokatalysator) kann zusätzlich eine andere Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden. Werden inerte Lösemittel verwendet, werden die Monomeren gasförmig oder flüssig zudosiert.

Das erfindungsgemäße Verfahren zeichnet sich dadurch aus, daß unter Verwendung der Addukte der Formel (I) Metallocene in hoher Ausbeute hergestellt werden können und nach diesem Verfahren auch neue Metallocene zugänglich sind. Das erfindungsgemäße Verfahren zeichnet sich außerdem durch eine große Anwendungsbreite aus, so daß strukturell verschiedenartige Metallocentypen synthetisiert werden können, insbesondere auch sterisch anspruchsvolle Verbindungen.

Die Erfindung wird durch folgende, die Erfindung jedoch nicht einschränkenden Beispiele erläutert.

Allgemeine Angaben: Herstellung und Handhabung der Verbindungen erfolgte unter Ausschluß von Luft und Feuchtigkeit unter Argon (Schlenk-Technik). Alle benötigten Lösungsmittel wurden vor Gebrauch durch mehrstündiges Sieden über geeigneten Trockenmitteln und anschließende Destillation unter Argon absolutiert.

### Beispiel 1. Zirkoniumtetrachlorid-(1,2-Dimethoxyethan)-Addukt

Eine Suspension von 18,5 g (80 mmol) Zirkoniumtetrachlorid in 250 ml Dichlormethan wird bei Raumtemperatur mit 7,2 g (80 mmol) 1,2-Dimethoxyethan versetzt und 1 Stunde bei dieser Temperatur gerührt. Anschließend wird flitriert und das Filtrat bei -30°C mit 100 ml Pentan versetzt und 5 Stunden bei dieser Temperatur gelagert. Der Rückstand wird abfiltriert, mit Pentan gewaschen und im Vakuum getrocknet.
Man erhält 22 g (85%) Zirkoniumtetrachlorid-(1,2-Dimethoxyethan)-Addukt.

### Beispiel 1a. Zirkoniumtetrachlorid-(1,2-S,S-Dimethylthioglykol)-Addukt

Das entsprechende Zirkoniumtetrachlorid-(1,2-S,S-Dimethylthioglykol)-Addukt wird analog Beispiel 1. unter Verwendung von 1,2-S,S-Dimethylthioglykol hergestellt.

### Beispiel 2. Dimethylsilandiylbis(2-methyl-4-(2-methylphenyl)indenyl)-zirkoniumdichlorid

Eine Lösung von 1 g (2 mmol) Dimethyllbis(2-methyl-4-(2-methylphenyl)indenyl)silan in 20 ml Toluol und 1 ml THF wird mit 1,5 ml (4 mmol) einer 2,66 molare Lösung von n-BuLi in Toluol versetzt und 2 Stunden bei 80 °C nachgerührt. Nach beendeter Deprotonierung läßt man auf 40°C abkühlen, gibt 0,65 g (2 mmol) Zirkoniumtetrachlorid-(1,2-Dimethoxyethan)-Addukt hinzu und läßt 2 Stunden bei dieser Temperatur nachrühren. Das Lösungsmittel wurde dann entfernt und der Rückstand mit 100 ml Dichlormethan extrahiert. Nach Abziehen des Dichlormethans verbleibt der Rohkomplex, der durch Umkristallisation aus Toluol weiter aufgereinigt wird. Man erhält 850 mg (65%) des reinen Metallocens (rac/meso 1:1).
¹H-NMR (300 MHz, CDCl₃): 7.58-6.90 (m, 16H), 2.49-/2.20 (m, 12H), 1.51-1.27 (m, 6H).

### Beispiel 3. Dimethylsilandiylbis(2-methyl-4-(2,3-dimethylphenyl)indenyl)-zirkoniumdichlorid

Die Synthese von Dimethylsilandiylbis(2-methyl-4-(2,3-dimethylphenyl)indenyl)-zirkonium-dichlorid wurde entsprechend Beispiel 2. unter Verwendung des Zirkoniumtetrachlorid-(1,2-Dimethoxyethan)-Adduktes durchgeführt, und der Komplex wurde in 61% Ausbeute isoliert.
¹H-NMR (300 MHz, CDCl₃): 7.54-6.8 (m, 14H), 2.48-/2.22 (m, 18H), 1.50-1.25 (m, 6H).

### Beispiel 4. Dimethylsilandiylbis(2-cyclohexyl-4-phenyl-indenyl)-zirkoniumdichlorid

Die Synthese von Dimethylsilandiylbis(2-cyclohexyl-4-phenyl-indenyl)-zirkoniumdichlorid wurde entsprechend Beispiel 2. unter Verwendung des Zirkoniumtetrachlorid-(1,2-Dimethoxyethan)-Adduktes durchgeführt. Der Komplex wurde in 59% Ausbeute isoliert.
¹H-NMR (300MHz, CDCl₃): 7.65-7.06 (m, 16 H), 6.92 (s, 2 H), 2.88-2.75 (m, 2 H), 2.00-0.95 (m, 20 H), 1.49-1.28 (m, 6 H).

### Beispiel 4a. Dimethylsilandiylbis(2-cyclohexyl-4-phenyl-indenyl)-zirkoniumdichlorid

Die Synthese von Dimethylsilandiylbis(2-cyclohexyl-4-phenyl-indenyl)-zirkoniumdichlorid wurde entsprechend Beispiel 2. unter Verwendung des analogen Zirkoniumtetrachlorid-(1,2-S,S-Dimethylthioglykol)-Adduktes durchgeführt. Der Komplex wurde in 49% Ausbeute isoliert.
¹H-NMR (300MHz, CDCl₃): 7.65-7.06 (m, 16 H), 6.92 (s, 2 H), 2.88-2.75 (m, 2 H), 2.00-0.95 (m, 20 H), 1.49-1.28 (m, 6 H).

### Vergleichsbeispiel zu 4. Dimethylsilandiylbis(2-cyclohexyl-4-phenyl-indenyl)-zirkoniumdichlorid

In einem Vergleichsexperiment wurde in der Komplexsynthese von Beispiel 4. Zirkoniumtetrachlorid anstelle des Zirkoniumtetrachlorid-(1,2-Dimethoxyethan)-Adduktes verwendet. In diesem Fall konnte kein Komplex isoliert werden.

### Beispiel 5. Dimethylsilandiylbis(2-methyl-4-(2,4,6-trimethylphenyl)indenyl)-zirkoniumdichlorid

Die Synthese von Dimethylsilandiylbis(2-methyl-4-(2,4,6-trimethylphenyl)indenyl)-zirkonium-dichlorid wurde entsprechend Beispiel 2. unter Verwendung des Zirkoniumtetrachlorid-(1,2-Dimethoxyethan)-Adduktes durchgeführt. Der Komplex wurde in 50% Ausbeute isoliert.
¹H-NMR (300 MHz, CDCl₃): 7.55-6.82 (m, 12H), 2.47-/2.23 (m, 24H), 1.51-1.26 (m, 6H).

### Beispiel 6. Dimethylsilandiylbis(2,4-diphenyl-indenyl)-zirkoniumdichlorid

Die Synthese von Dirnethylsilandiylbis(2,4-diphenyl-indenyl)-zirkoniumdichlorid wurde entsprechend Beispiel 2. unter Verwendung des Zirkoniumtetrachlorid-(1,2-Dimethoxyethan)-Adduktes durchgeführt. Der Komplex wurde in 57% Ausbeute isoliert.
¹H-NMR (300MHz, CDCl₃): 7.81-6.91(m, 26H), 6.75/6.69 (s, 2H), 1.45/0.41 (d, 6H, meso), 0.87 (s, 6H, rac).

### Beispiel 7. Dimethylsilandiylbis(2-isopropyl-4-phenyl-indenyl)-zirkoniumdichlorid

Die Synthese von Dimethylsilandiylbis(2-isopropyl-4-phenyl-indenyl)-zirkoniumdichlorid wurde entsprechend Beispiel 2. unter Verwendung des Zirkoniumtetrachlorid-(1,2-Dimethoxyethan)-Adduktes durchgeführt. Der Komplex. wurde in 51% Ausbeute isoliert.
¹H-NMR (300MHz, CDCl₃): 7.70-7.03 (m, 18H), 3.20 (sept., 2H), 1.41 (s, 6H), 1.13 (m, 12H).

### Beispiel 8. [4-(η⁵-Fluorenyl)-4-methyl-6-phenyl-(η⁵-4,5,6,7-tetrahydropentalenyl)]-zirkoniumdichlorid

4,7 ml (12,6 mmol) n-Butyllithiums, 20%ig in Toluol, tropfen bei Raumtemperatur zu 2,16 g (6 mmol) 1-Fluorenyl-3-phenyl-1-methyl-1,2,3-trihydropentalen in 50 ml Toluol. Nach 4 stündigem Rühren bei 60°C wird auf 10°C abgekühlt. Zu der so erhaltenen roten Suspension werden 1,94 g (6 mmol) Zirkoniumtetrachlorid-(1,2-Dimethoxyethan)-Addukt zugegeben und 3 h bei Raumtemperatur gerührt. Nach Filtration über Celite wird 2 mal mit je 50 ml heißem (80°C) Toluol nachgewaschen. Durch Einengen der vereinigten Filtrate auf 10 ml, Kühlen auf-30°C, Filtration des ausgefallenen roten Pulvers und Trocknen erhält man 0,970 g (1,9 mmol) Komplex (31%).
¹H-NMR (300MHz, CDCl₃): 7.99-7.75, 7.52-6.93 (13 H, m, arom. Protonen), 6.32 (1 H, dd, arom. Cp-H), 6,16 (1 H, t, arom. Cp-Proton), 4,45 (1 H, dd, CH₂), 4,17 (1H, dd, CH₂), 3,03 (1 H, dd, CH-Ph), 2,45 (3 H, s, CH₃).

### Beispiel 9. Dimethylsilandiylbis(2,3,5-trimethylcyclopentadienyl)-zirkoniumdichlorid

Eine Lösung von 3 g (11 mmol) Dimethylbis(2,3,5-trimethylcyclopentadienyl)silan in 20 ml Toluol und 1 ml THF wird mit 8.22 ml (22 mmol) einer 2.68 molaren Lösung von n-BuLi in Toluol versetzt und 2 Stunden bei 80°C gerührt. Nach Abkühlen auf 45°C werden 3.91 g (12.1 mmol) Zirkoniumtetrachlorid-(1,2-Dimethoxyethan)-Addukt hinzugegeben und 2 Stunden bei 60°C nachgerührt. Das Lösungsmittel wird entfernt und der Rückstand mit 125 ml Toluol extrahiert. Nach Abziehen des Toluols erhält man 2.85 g (60%) des reinen Metallocens (pseudo-rac/pseudo-meso 1:1).
¹H-NMR (300 MHz, CDCl₃): 6.50 (s, 1 H), 6.38 (s, 1H), 2.25 (s, 3H), 2.20 (s, 3H), 2.16 (s, 3H), 2.12 (s, 3H), 1.98 (s, 3H), 1.88 (s, 3H), 0.98/0.94 (s, 6H), 0.95 (s, 6H).

## Patentansprüche

1. Verfahren zur Herstellung eines Metallocens, wobei eine Ligand-Ausgangsverbindung mit einem Addukt der Formel (I) umgesetzt wird,
M¹XₙDₐ (I)
worin M¹ Zirkonium bedeutet,
X gleich oder verschieden, Halogen, C₁-C₁₀-Alkoxy, C₆-C₁₀-Aryloxy, C₁-C₁₀-Alkylsulfonat, C₆-C₁₀-Arylsulfonat, C₁-C₁₀-Alkylcarboxylat oder 1,3-Dicarbonylat oder fluoriertes 1,3-Dicarbonylat ist,
n eine ganze Zahl ist und der Oxidationzahl des Metalls M¹ entspricht,
a eine ganze oder gebrochene Zahl ist und 0 < a ≤ 4 ist,
D ein linearer, cyclischer oder verzweigter und mindestens zwei Sauerstoffatome enthaltender Oligo- oder Polyether bzw. ein mindestens zwei Schwefelatome enthaltender Oligo- oder Polythioether ist, und
wobei das Addukt der Formel (I) separat synthetisiert wird.

2. Verfahren gemäß Anspruch 1, worin die Ligandausgangsverbindung mit einer Base deprotoniert wird.

3. Verwendung eines Addukts der Formel I wie in Anspruch 1 definiert, zur Herstellung eines Metallocens.

## Claims

1. A process for preparing a metallocene, which comprises reacting a ligand starting compound with an adduct of the formula (I),
M¹XₙDₐ (I)
where M¹ is zirconium,
X are identical or different and are each halogen, C₁-C₁₀-alkoxy, C₆-C₁₀-aryloxy, C₁-C₁₀-alkylsulfonate, C₆-C₁₀-arylsulfonate, C₁-C₁₀-alkylcarboxylate or 1,3-dicarbonylate or fluorinated 1,3-dicarbonylate,
n is an integer and corresponds to the oxidation number of the metal M¹,
a is an integer or fraction and 0 < a # 4,
D is a linear, cyclic or branched oligoether or polyether containing at least two oxygen atoms or an oligothioether or polythioether containing at least two sulfur atoms, wherein the adduct of the formula (I) is synthesized separately.

2. The process as claimed in Claim 1, wherein the ligand starting compound is deprotonated using a base.

3. The use of an adduct of the formula I as defined in Claim 1 for preparing a metallocene.

## Revendications

1. Procédé pour la préparation d'un métallocène, dans lequel on fait réagir une matière première de ligand avec un produit d'addition de formule (I)
M¹XₙDₐ (I)
où
M¹ désigne le zirconium,
X, identique ou différent, est un halogène, un alcoxy en C₁-C₁₀, un aryloxy en C₆-C₁₀, un alkyl(C₁-C₁₀)sulfonate, un aryl(C₆-C₁₀)sulfonate, un alkyl(C₁-C₁₀)carboxylate ou un 1,3-dicarbonylate ou un 1,3-dicarbonylate fluoré,
n est un nombre entier et correspond au degré d'oxydation du métal M¹,
a est un nombre entier ou fractionnaire et 0 < a 4,
D est un oligo- ou polyéther cyclique ou ramifié et contenant au moins deux atomes d'oxygène, ou un oligo- ou polythioéther contenant au moins deux atomes de soufre, et
tandis que le produit d'addition de formule (I) est synthétisé séparément.

2. Procédé selon la revendication 1, dans lequel la matière première de ligand est déprotonée avec une base.

3. Utilisation d'un produit d'addition de formule I tel que défini dans la revendication 1, pour la préparation d'un métallocène.
